# EUROPÄISCHE PATENTSCHRIFT

(11) **EP 1 917 139 B1**
(45) Veröffentlichungstag und Bekanntmachung des Hinweises auf die Patenterteilung: **16.05.2012**
(21) Anmeldenummer: 06818646.9
(22) Anmeldetag: 17.11.2006
(51) Int. Cl.: B32B 3/24, A23L 3/3436, B65D 51/24

(54) **VERBUNDSYSTEM UND DESSEN VERWENDUNG SOWIE VERFAHREN ZUM SAUERSTOFFFREIEN VERPACKEN VON OXIDATIONSEMPFINDLICHEN VERPACKUNGSGÜTERN**
COMPOSITE SYSTEM, ASSOCIATED USE AND METHOD FOR THE OXYGEN-FREE PACKAGING OF ITEMS SUSCEPTIBLE TO OXIDATION
SYSTEME COMPOSITE, UTILISATION DE CELUI ET PROCEDE POUR EMBALLER DANS UNE ATMOSPHERE EXEMPTE D'OXYGENE DES PRODUITS A EMBALLER SENSIBLES A L'OXYDATION

(30) Priorität: 22.11.2005 DE 102005055632
(43) Veröffentlichungstag der Anmeldung: 07.05.2008
(73) Patentinhaber: Fraunhofer-Gesellschaft zur Förderung der angewandten Forschung e.V., 80686 München (DE); 3A Technology & Management AG, 8212 Neuhausen am Rheinfall (CH)
(72) Erfinder: WANNER, Thomas, 86529 Schrobenhausen (DE); LOHWASSER, Wolfgang, 78262 Gailingen (DE)
(74) Vertreter: Pfenning, Meinig & Partner GbR
(86) Internationale Anmeldenummer: PCT/EP2006/011078
(87) Internationale Veröffentlichungsnummer: WO 2007/059903

(56) Entgegenhaltungen:
- EP-A- 1 576 896
- WO-A-00/35304
- WO-A-02/02409
- WO-A-99/05922
- WO-A-99/15433
- DE-A1- 2 836 770
- GB-A- 734 197
- GB-A- 890 550
- GB-A- 1 065 991
- GB-A- 1 065 992

## Beschreibung

Die Erfindung betrifft ein Dünnschicht-Verbundsystem, das mindestens eine Substratfolie und mindestens eine Dünnschicht aufweist. Der Katalysator katalysiert dabei die Reduktion von Sauerstoff, wodurch bei oxidationsempfindlichen Verpackungsgütern störender Sauerstoff verbraucht wird. Daher wird das erfindungsgemäße Verbundsystem auch in Form von Beutelfolien, Abdeckfolien oder partiell applizierten Einzelfolien für Sauerstoff-empfindliche Verpackungsgüter verwendet. Erfindungsgemäß wird ebenso ein Verfahren zum sauerstofffreien Verpacken von oxidationsempfindlichen Verpackungsgütern bereitgestellt.

Bei aus dem Stand der Technik bekannten Verpackungen mit modifizierter Gasatmosphäre wird in der Regel eine Verpackung mit dem Verpackungsgut bestückt und anschließend mittels einer Gasspülung mit einem Inertgas, z.B. mit Stickstoff, gespült und anschließend verschlossen. Das Ziel hierbei ist es, den verbleibenden Gasraum in der Verpackung möglichst sauerstofffrei zu halten. Es zeigt sich hier jedoch bei dem aus dem Stand der Technik bekannten Verfahren, dass mit dieser Methode der Restsauerstoffgehalt im Kopfraum der Verpackung nicht unterhalb von 0,5 bis 2 Vol-% reduziert werden kann. Bei Sauerstoffempfindlichen Verpackungsgütern, insbesondere Lebensmitteln, führt bereits dieser geringe Restsauerstoffgehalt über die Lagerzeit zu qualitativen Beeinträchtigungen des Verpackungsgutes.

Eine Variante zur Lösung dieses Problems sieht vor, dass Sauerstoff-Adsorbermaterialien in eine Verpackungsfolie eingearbeitet oder aber in Form von zusätzlichen diese Sauerstoff-Adsorbermaterialien enthaltenden Beuteln in Verpackungen eingelegt werden. Aber auch diese Technik bringt Nachteile mit sich. So sind derartige Systeme oft nicht transparent, z.B. bei Verwendung von Eisenoxid in Kunststoff, oder reagieren relativ langsam, wodurch bei empfindlichen Verpackungsgütern die Oxidation des Verpackungsgutes schneller als die des Sauerstoff-Adsorbers abläuft.

Ausgehend hiervon war es Aufgabe der vorliegenden Erfindung, ein Verpackungssystem bereitzustellen, das direkt nach dem Abpacken eine hochgradig sauerstofffreie Kopfraumatmosphäre ermöglicht und gleichzeitig einfach und kostengünstig herstellbar ist.

Diese Aufgabe wird durch das Dünnschicht-Verbundsystem mit den Merkmalen des Anspruchs 1 und das Verfahren zum sauerstofffreien Verpacken mit den Merkmalen des Anspruchs 20 gelöst. In Anspruch 23 werden erfindungsgemäße Verwendungen genannt. Die weiteren abhängigen Ansprüche zeigen vorteilhafte Weiterbildungen auf.

Erfindungsgemäß wird ein Verbundsystem bereitgestellt, das mindestens eine Substratfolie und mindestens eine darauf angeordnete Dünnschicht enthält. Die Dünnschicht wiederum enthält mindestens einen Katalysator für die Reduktion von Sauerstoff.

Unter Dünnschicht werden erfindungsgemäß sämtliche Schichtsysteme verstanden, die durch Vakuumbeschichtungsverfahren (CVD und PVD) sowie elektrolytisches Abscheiden oder Lackierung im Nanomaßstab herstellbar sind.

Das erfindungsgemäße Konzept beruht darauf, dass mit Hilfe des Katalysators eine Reduktion des Sauerstoffs herbeigeführt wird, wobei der im Kopfraum einer Verpackung enthaltende Sauerstoff durch Zusatz von geringen Mengen eines reduzierenden Gases katalytisch umgesetzt wird. Ein Beispiel hierfür ist die Knallgasreaktion:

H₂ + ½ O₂ -----> H₂O

Bei dem hier beschriebenen erfindungsgemäßen System handelt es sich somit um ein O₂-Scavenger-System. Durch die katalytische Umsetzung wird der in der Atmosphäre befindliche Sauerstoff entfernt.

Als Katalysatoren für die Reduktion von Sauerstoff sind grundsätzlich alle aus dem Stand der Technik bekannten Katalysatoren einsetzbar. Vorzugsweise ist der Katalysator ein Edelmetall, z.B. Palladium oder Platin. Eine andere bevorzugte Variante sieht vor, dass der Katalysator ein Metalloxid oder ein metallisches Mischoxid ist, insbesondere Co₃O₄ oder das Mischoxid Mn-CuO-Ag₂O.

Der Katalysator wird vorzugsweise als möglichst dünne Schicht, besonders bevorzugt als monoatomare Lage aufgebracht. Dies soll zum einen die optische Transparenz im Wellenbereich des Spektrums des sichtbaren Lichts sicherstellen, zum anderen die Herstellungskosten möglichst gering halten.

Die Dünnschicht wird im Vakuum auf die Substratfolie aufgedampft. Dünnschichttechnologie ermöglicht dabei einen wirtschaftlichen Einsatz des ansonsten sehr teuren Katalysatormaterials.

Die Dünnschicht besitzt vorzugsweise eine Schichtdicke von 0,01 bis 50 nm, insbesondere 1 bis 50 nm. Dabei ist die verwendete Dicke der Schicht und dessen Oberflächenstruktur von der geforderten Scavenger-Kinetik abhängig. Der abzubauende Sauerstoff kann dabei ebenso wie der Wasserstoff durch das Verbundsystem bis zur Katalysatorschicht diffundieren und wird dort katalytisch zu Wasserstoff umgesetzt.

Die Substratfolie kann ebenfalls aus einer Verbundfolie bestehen. Eine bevorzugte Variante sieht vor, dass die Substratfolie eine Sperrschicht für Sauerstoff aufweist, die die Sauerstoffpermeation durch das Verbundsystem verhindert. Besonders bevorzugt besteht die hier beschriebene Sperrschicht aus SiOₓ mit x = 1,0 bis 2,0, AlO_{y} mit y = 1,3 bis 1,6, Ethylenvinylalkoholcopolymeren und/oder Vinylidenchloridcopolymeren.

Hinsichtlich der Substratfolie bestehen ansonsten keine wesentlichen Beschränkungen. So können hier vorzugsweise alle aus dem Verpackungsbereich bekannten Kunststoffe verwendet werden. Bevorzugt besteht die Substratfolie aus Polyethylenterephthalat (PET), Polyolefinen, insbesondere Polypropylen (PP) und Polyethylen (PE), Polyamiden (PA), Polystyrolen (PS), pen (PS), Polycarbonaten sowie deren Copolymeren und/oder Polymerblends.

Eine weitere bevorzugte Ausführungsform des erfindungsgemäßen Dünnschicht-Verbundsystems sieht vor, dass zwischen der Substratfolie und einer weiteren Schicht sandwichartig die Katalysatorschicht zumindest bereichsweise kraftschlüssig eingeschlossen ist. Die weitere Schicht kann dabei vorzugsweise mit einem Kaschierklebstoff zumindest bereichsweise kraftschlüssig aufgebracht sein. Als weitere Schicht kommen hierbei bevorzugt eine Lackschicht, eine Kaschierklebstoffschicht oder eine Polymerfolie in Betracht. Das Polymer kann dabei besonders bevorzugt ausgewählt sein aus der Gruppe der Polyethylenterephthalate, Polyolefine, insbesondere Polypropylen und Polyethylen, Polyamide, Polystyrole, Polycarbonate, Ionomere, sowie deren Copolymeren und/oder Polymerblends. Hierbei sind besonders Ethylen-(meth)acrylsäure-Copolymere zu nennen. Ebenso wie für die Substratfolie bestehen hinsichtlich des Materials der Abdeckfolie keine wesentlichen Beschränkungen, sodass auch hier beliebige Polymere, die im Verpackungsbereich verwendet werden, eingesetzt werden können. Besonders bevorzugt besteht die Abdeckfolie aus Polyethylen.

Eine weitere bevorzugte Variante sieht vor, dass das erfindungsgemäße Verbundsystem im Wellenbereich des Spektrums des sichtbaren Lichts transparente Eigenschaften aufweist. Dies bedeutet, dass für einen Betrachter das Verbundsystem keinerlei Verfärbungen oder Trübungen zeigt.

Eine weitere Variante sieht vor, dass das erfindungsgemäße Verbundsystem zusätzlich einen Emitter für ein reduzierendes Gas, insbesondere einen H₂-Emittter, enthält. Hierzu sind grundsätzlich alle Verbindungen und Systeme geeignet, die zur Freisetzung von Wasserstoff in der Lage sind. Beispielsweise zählen hierzu ein System aus einer Säure und einem unedlen Metall, d.h. einem Metall mit niedrigem Normalpotential, z.B. Zink und Salzsäure. Ein weiteres Beispiel für H₂-Emitter ist ein System aus Metallhydriden und Wasser, bei dem es durch reaktive Umsetzung zur Bildung von Metallhydroxid und Wasserstoff kommt. Ein weiteres Beispiel ist die Umsetzung von Eisenchlorid und Wasser, bei dem ebenfalls Wasserstoff freigesetzt werden kann.

Erfindungsgemäß wird ebenso ein Verfahren zum sauerstofffreien Verpacken von oxidationsempfindlichen Verpackungsgütern bereitgestellt. Hierbei wird das Verpackungsgut zunächst in ein Dünnschicht-Verbundsystem, wie es zuvor beschrieben wurde, eingelegt. Verpackungsgut und Verbundsystem werden dann mit einem Inertgas, insbesondere Stickstoff, gespült. Optional ist es auch möglich, dass der Kopfraum der Verpackung zunächst evakuiert wird. Wesentlich für die Erfindung ist es nun, dass dem Inertgas geringe Mengen an Wasserstoff zugesetzt werden, durch die die katalytische Umsetzung des Sauerstoffs ermöglicht wird. Nach dem Spülen des Systems erfolgt dann der gasdichte Verschluss der Verpackung. In Verbindung mit der Katalysatorschicht erfolgt dann im Kopfraum der Verpackung eine nahezu sofortige Umsetzung des Wasserstoffs mit dem verbliebenen Restwasserstoff zu Wasser. Dies ermöglicht eine sauerstofffreie Verpackung.

Vorzugsweise werden dem Inertgas 0,5 bis 20 Vol-% Wasserstoff zugesetzt.

Die erfindungsgemäßen Verbundsysteme werden vorzugsweise als Verpackungsfolie, Beutelfolie oder als partiell applizierte Einzelfolie eingesetzt. Die beschriebenen Verbundsysteme eigenen sich dabei hervorragend als Verpackungsfolien für beliebige Verpackungsgüter, insbesondere Lebensmittel. Ebenso kann das erfindungsgemäße Verbundsystem auch als Einzelfolie in einem Produkt selbst verwendet werden, z.B. als Folie in einem elektrischen Gerät, um dessen Funktion zu gewährleisten, wenn einzelne Komponenten des Geräts extrem feuchteempfindlich sind. Die Anwendungsfälle betreffen dabei die Lebensmittelindustrie, pharmazeutische Produkte und Geräte, die Elektronikindustrie, die chemische Industrie aber auch kulturelle und militärische Bereiche.

Anhand der nachfolgenden Figur soll der erfindungsgemäße Gegenstand näher erläutert werden, ohne diesen auf die hier gezeigte spezielle Ausführungsform einschränken zu wollen.

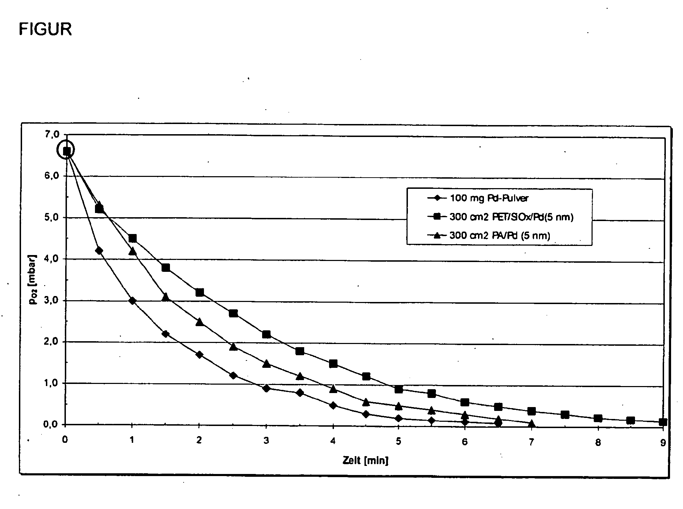

Die Figur zeigt die Abnahme des Sauerstoffpartialdruckes in einem Kompartiment über die Zeit. In dem Kompartiment befindet sich als Katalysator Palladium und eine Gasmischung aus Sauerstoff, Wasserstoff und Stickstoff. Der Sauerstoff wird am Katalysator mit dem Wasserstoff zu Wasser umgesetzt. Diese katalytische Reaktion begründet die Abnahme des Sauerstoffpartialdruckes über die Zeit. In der Figur sind drei verschiedene erfindungsgemäße Verbundsysteme gegenübergestellt. Das erste verwendet pulverförmiges Palladium, das zweite stellt ein mit Palladium bedampftes Verbundsystem aus PET und SiOₓ mit x = 1,0 bis 2,0 und das dritte eine mit Palladium bedampfte Folie aus Polyamid dar.

Aus der Figur wird ersichtlich, dass sowohl das pulverförmige Palladium als auch die aufgedampften Palladiumschichten den Sauerstoff von einem Partialdruck pO₂ = 7 mbar auf unter 0,1 mbar innerhalb von weniger als 9 Minuten reduzieren.

## Patentansprüche

1. Verbundsystem enthaltend mindestens eine Substratfolie und mindestens eine darauf angeordnete Dünnschicht, die mindestens einen Katalysator für die Reduktion von Sauerstoff enthält, **dadurch gekennzeichnet, dass** die Dünnschicht im Vakuum aufgedampft oder elektrolytisch abgeschieden ist.

2. Verbundsystem nach Anspruch 1, **dadurch gekennzeichnet, dass** der Katalysator für die Reduktion von Sauerstoff ein Edelmetall ist.

3. Verbundsystem nach Anspruch 2, **dadurch gekennzeichnet, dass** das Edelmetall Palladium oder Platin ist.

4. Verbundsystem nach einem der vorhergehenden Ansprüche, **dadurch gekennzeichnet, dass** der Katalysator ein Metalloxid oder ein metallisches Mischoxid ist.

5. Verbundsystem nach dem vorhergehenden Anspruch, **dadurch gekennzeichnet, dass** das Metalloxid MnO₂-CuO-Ag₂O oder Co₃O₄ ist.

6. Verbundsystem nach einem der vorhergehenden Ansprüche, **dadurch gekennzeichnet, dass** der Katalysator als monoatomare Lage aufgebracht ist.

7. Verbundsystem nach einem der vorhergehenden Ansprüche, **dadurch gekennzeichnet, dass** die Dünnschicht eine Dicke im Bereich von 0,01 bis 50 nm aufweist.

8. Verbundsystem nach einem der vorhergehenden Ansprüche, **dadurch gekennzeichnet, dass** die Dünnschicht im Wellenbereich des Spektrums des sichtbaren Lichts transparent ist.

9. Verbundsystem nach einem der vorhergehenden Ansprüche, **dadurch gekennzeichnet, dass** die Substratfolie eine Verbundfolie ist.

10. Verbundsystem nach dem vorhergehenden Anspruch, **dadurch gekennzeichnet, dass** die Substratfolie eine Sperrschicht für Sauerstoff aufweist.

11. Verbundsystem nach dem vorhergehenden Anspruch, **dadurch gekennzeichnet, dass** die Sperrschicht aus SiOₓ mit x = 1,0 bis 2,0, AlO_{y} mit y = 1,3 bis 1,6, Ethylenvinylalkoholcopolymeren und/oder Vinylidenchloridcopolymeren besteht.

12. Verbundsystem nach einem der Ansprüche 9 bis 11, **dadurch gekennzeichnet, dass** die Substratfolie aus der Gruppe der Polyethylenterephthalate, Polyolefine, Polyamide, Polystyrole, Polycarbonate sowie deren Copolymeren und Polymerblends besteht.

13. Verbundsystem nach einem der vorhergehenden Ansprüche, **dadurch gekennzeichnet, dass** die Dünnschicht sandwichartig zwischen der Substratfolie und einer weiteren Schicht zumindest bereichsweise kraftschlüssig eingeschlossen ist.

14. Verbundsystem nach dem vorhergehenden Anspruch, **dadurch gekennzeichnet, dass** die weitere Schicht eine Lackschicht, eine Kaschierklebstoffschicht oder eine Polymerfolie ist.

15. Verbundsystem nach dem vorhergehenden Anspruch, **dadurch gekennzeichnet, dass** die Polymerfolie ausgewählt ist aus der Gruppe der Polyethylenterephthalate, Polyolefine, Polyamide, Polystyrole, Polycarbonate sowie deren Copolymeren und Polymerblends.

16. Verbundsystem nach einem der vorhergehenden Ansprüche, **dadurch gekennzeichnet, dass** das Verbundsystem im Wellenbereich des Spektrums des sichtbaren Lichts transparent ist.

17. Verbundsystem nach einem der vorhergehenden Ansprüche, **dadurch gekennzeichnet, dass** das Verbundsystem einen Emitter für ein reduzierendes Gas, insbesondere Wasserstoff, enthält.

18. Verbundsystem nach dem vorhergehenden Anspruch, **dadurch gekennzeichnet, dass** der Wasserstoff-Emitter aus einer Säure und einem unedlen Metall besteht.

19. Verbundsystem nach Anspruch 17, **dadurch gekennzeichnet, dass** der Wasserstoff-Emitter aus einem Metallhydrid und Wasser besteht.

20. Verfahren zum sauerstofffreien Verpacken von oxidationsempfindlichen Verpackungsgütern, bei dem das Verpackungsgut in ein Kompartiment, bestehend aus einem Verbundsystem nach einem der vorhergehenden Ansprüche, eingelegt, mit einem mit einem reduzierenden Gas versetzten Inertgas gespült und gasdicht verschlossen wird.

21. Verfahren nach dem vorhergehenden Anspruch, **dadurch gekennzeichnet, dass** das Inertgas Stickstoff ist.

22. Verfahren nach einem der Ansprüche 20 oder 21, **dadurch gekennzeichnet, dass** das Intergas von 0,5 bis 20 Vol.-% des reduzierenden Gases insbesondere Wasserstoff enthält.

23. Verwendung des Verbundsystems nach einem der Ansprüche 1 bis 19 als Verpackungsfolie, Beutelfolie oder partiell applizierte Einzelfolie.

## Claims

1. Composite system containing at least one substrate film and at least one thin film disposed thereon, which comprises at least one catalyst for the reduction of oxygen, **characterised in that** the thin film is vapour-deposited in a vacuum or is deposited electrolytically.

2. Composite system according to claim 1, **characterised in that** the catalyst for the reduction of oxygen is a noble metal.

3. Composite system according to claim 2, **characterised in that** the noble metal is palladium or platinum.

4. Composite system according to one of the preceding claims, **characterised in that** the catalyst is a metal oxide or a metallic mixed oxide.

5. Composite system according to the preceding claim, **characterised in that** the metal oxide is MnO₂-CuO-Ag₂O or Co₃O₄.

6. Composite system according to one of the preceding claims, **characterised in that** the catalyst is applied as monoatomic layer.

7. Composite system according to one of the preceding claims, **characterised in that** the thin film has a thickness in the range of 0.01 to 50 nm.

8. Composite system according to one of the preceding claims, **characterised in that** the thin film is transparent in the wave length range of the spectrum of visible light.

9. Composite system according to one of the preceding claims, **characterised in that** the substrate film is a composite film.

10. Composite system according to the preceding claim, **characterised in that** the substrate film has a barrier layer for oxygen.

11. Composite system according to the preceding claim, **characterised in that** the barrier layer consists of SiOₓ with x = 1.0 to 2.0, AlO_{y} with y = 1.3 to 1.6, ethylene vinyl alcohol copolymers and/or vinylidene chloride copolymers.

12. Composite system according to one of the claims 10 to 12, **characterised in that** the substrate film consists of the group of polyethylene terephthalates, polyolefins, polyamides, polystyrenes, polycarbonates and also the copolymers and polymer blends thereof.

13. Composite system according to one of the preceding claims, **characterised in that** the thin film is enclosed at least in regions in a frictional fit between the substrate film and a further layer in the manner of a sandwich.

14. Composite system according to the preceding claim, **characterised in that** the further layer is a paint layer, an adhesive backing layer or a polymer film.

15. Composite system according to the preceding claim, **characterised in that** the polymer film is selected from the group of polyethylene terephthalates, polyolefins, polyamides, polystyrenes, polycarbonates and also the copolymers and polymer blends thereof.

16. Composite system according to one of the preceding claims, **characterised in that** the composite system is transparent in the wave length range of the spectrum of visible light.

17. Composite system according to one of the preceding claims, **characterised in that** the composite system comprises an emitter for a reducing gas, in particular hydrogen.

18. Composite system according to the preceding claim, **characterised in that** the hydrogen emitter consists of an acid and a base metal.

19. Composite system according to claim 18, **characterised in that** the hydrogen emitter consists of a metal hydride and water.

20. Method for oxygen-free packaging of oxidation-susceptible packaging items, in which the packaging item is inserted in a compartment comprising a composite system according to one of the preceding claims, is purged with an inert gas mixed with a reducing gas and is sealed in a gas-tight manner.

21. Method according to the preceding claim, **characterised in that** the inert gas is nitrogen.

22. Method according to one of the claims 21 or 22, **characterised in that** in particular hydrogen.

23. Use of the composite system according to one of the claims 1 to 19 as packaging film, bag film or partially applied individual film.

## Revendications

1. Système composite contenant au moins une feuille de substrat et au moins une couche mince appliquée par-dessus, qui contient au moins un catalyseur pour la réduction de l'oxygène, **caractérisé en ce que** la couche mince est déposée sous vide par évaporation ou est séparée par voie électrolytique.

2. Système composite selon la revendication 1, **caractérisé en ce que** le catalyseur pour la réduction de l'oxygène est un métal noble.

3. Système composite selon la revendication 2, **caractérisé en ce que** le métal noble est le palladium ou le platine.

4. Système composite selon l'une quelconque des revendications précédentes, **caractérisé en ce que** le catalyseur est un oxyde de métal ou un oxyde métallique mixte.

5. Système composite selon la revendication précédente, **caractérisé en ce que** l'oxyde de métal est le composé MnO₂-CuO-Ag₂O ou Co₃O₄.

6. Système composite selon l'une quelconque des revendications précédentes, **caractérisé en ce que** le catalyseur est appliqué sous la forme d'une couche monoatomique.

7. Système composite selon l'une quelconque des revendications précédentes, **caractérisé en ce que** la couche mince présente une épaisseur dans la plage de 0,01 à 50 nm.

8. Système composite selon l'une quelconque des revendications précédentes, **caractérisé en ce que** la couche mince est transparente dans la gamme d'ondes du spectre de la lumière visible.

9. Système composite selon l'une quelconque des revendications précédentes, **caractérisé en ce que** la feuille de substrat est une feuille composite.

10. Système composite selon la revendication précédente, **caractérisé en ce que** la feuille de substrat présente une couche barrière à l'oxygène.

11. Système composite selon la revendication précédente, **caractérisé en ce que** la couche barrière est constituée de SiOₓ avec x = 1,0 à 2,0, d'AlO_{y} avec y = 1,3 à 1,6, de copolymères d'éthylène-alcool vinylique et/ou de copolymères de chlorure de vinylidène.

12. Système composite selon l'une quelconque des revendications 9 à 11, **caractérisé en ce que** la feuille de substrat est constituée du groupe formé par les poly(téréphtalates d'éthylène), des polyoléfines, des polyamides, des polystyrènes, des polycarbonates, ainsi que leurs copolymères et leurs mélanges de polymères.

13. Système composite selon l'une quelconque des revendications précédentes, **caractérisé en ce que** la couche mince est incorporée par adhérence, au moins par zones, en sandwich entre la feuille de substrat et une autre couche.

14. Système composite selon la revendication précédente, **caractérisé en ce que** l'autre couche est une couche de vernis, une couche adhésive de contrecollage ou une feuille de polymère.

15. Système composite selon la revendication précédente, **caractérisé en ce que** la feuille de polymère est choisie dans le groupe comprenant des poly(téréphtalates d'éthylène), des polyoléfines, des polyamides, des polystyrènes, des polycarbonates, ainsi que leurs copolymères et mélanges de polymères.

16. Système composite selon l'une quelconque des revendications précédentes, **caractérisé en ce que** le système composite est transparent dans la gamme d'ondes du spectre de la lumière visible.

17. Système composite selon l'une quelconque des revendications précédentes, **caractérisé en ce que** le système composite contient un émetteur pour un gaz réducteur, en particulier de l'hydrogène.

18. Système composite selon la revendication précédente, **caractérisé en ce que** l'émetteur d'hydrogène est constitué d'un acide et d'un métal non noble.

19. Système composite selon la revendication 17, **caractérisé en ce que** l'émetteur d'hydrogène est constitué d'un hydrure métallique et d'eau.

20. Procédé pour l'emballage sans oxygène d'articles d'emballage sensibles à l'oxydation, dans lequel l'article d'emballage est déposé dans un compartiment constitué d'un système composite selon l'une quelconque des revendications précédentes, rincé avec un gaz inerte en alternance avec un gaz réducteur, puis enfermé de manière étanche aux gaz.

21. Procédé selon la revendication précédente, **caractérisé en ce que** le gaz inerte est l'azote.

22. Procédé selon l'une quelconque des revendications 20 ou 21, **caractérisé en ce que** le gaz inerte contient de 0,5 à 20 % en volume du gaz réducteur, en particulier d'hydrogène.

23. Utilisation du système composite selon l'une quelconque des revendications 1 à 19 comme feuille d'emballage, feuille de sachet ou feuille individuelle partiellement appliquée.
